Europäisches Patentamt

European Patent Office

Office européen des brevets

(11) Publication number : **0 565 385 A2**

(12) **EUROPEAN PATENT APPLICATION**

(21) Application number : **93302817.7**

(22) Date of filing : **08.04.93**

(51) Int. Cl.⁵ : **H04N 3/38**

(30) Priority : **10.04.92 GB 9207973**

(43) Date of publication of application :
**13.10.93 Bulletin 93/41**

(84) Designated Contracting States :
**DE NL**

(71) Applicant : **RANK CINTEL LIMITED**
**Watton Road**
**Ware Hertfordshire SG12 OAE (GB)**

(72) Inventor : **Mead, Terence William**
**51 Rib Vale**
**Hertford, Hertfordshire SG12 OAE (GB)**
Inventor : **Hunt, Stuart William Arundell**
**8 Townsend Street**
**Hertford, Hertfordshire SG13 7BP (GB)**

(74) Representative : **LLOYD, Patrick Alexander**
**Desmond**
**Reddie & Grose 16 Theobalds Road**
**London WC1X 8PL (GB)**

(54) Improvements relating to flying spot scanners.

(57)    A flying-spot telecine detects film alignment by a light interrupter disc (28) (or drum) which is directly mounted on the axle of a sprocket wheel (22) of the film transport mechanism. The film is moved approximately to an expected position, and a light source (34) and detector (36) on opposite sides of the disc provide pulses representative of the determined film positions. Differences between determined and expected film positions are calculated to provide a correction signal used to adjust the vertical position of the scanning raster of the telecine CRT(2).

Fig 2

This invention relates to apparatus for converting between images recorded on film and video signals, which includes film scanners and telecines. The invention is particularly concerned with the relative alignment of scans and film frames to be scanned.

In a conventional telecine of the flying-spot type, the vertical positioning of film frames is corrected by a servo-system. The servo-system includes a sprocket hole detector which measures positions of sprocket holes of film frames using an opto-mechanical pulse generator of known type. The servo-system also includes a connection to a drive motor. The drive motor drives a film capstan. A pulse signal is fed from the pulse generator to a control circuit for the capstan drive motor where it is applied as a correction signal to align the film lengthways with the light scan; the scan being fixed in position. Such a servo-system is used in a Rank Cintel MK3 telecine for example.

A disadvantage of such prior art systems is that the motor which drives the capstan has inertia, as do other mechanical parts of the telecine which couple the motor to the film. Accordingly, there is a delay between measurement and correction of film frame alignments. In effect, correction is applied at the wrong time. Another disadvantage is that the sprocket hole detector generates errors in measurement which cause the film to be positioned incorrectly. These errors are often of a systematic and cyclic nature. Both of these effects are minimised by the use of a filter in the servo-system in order that the response to film frame misalignment is slowed. However, this means that the servo-system is not able to correct for faster movements of the film.

When operating a telecine, the operator uses a stop control to stop the film in order to examine a displayed frame scan and make corrections where appropriate, for example to adjust the colour balance. The telecine is then in active stop mode. In a conventional flying-spot telecine in active stop mode, a film frame is stopped in the viewing gate by the servo-system operating on the capstan drive motor as described above. The film is stopped when an appropriate edge of a sprocket pulse signal is detected. In practice, sprocket pulses have edges which slope with finite gradients, as changes in the pulsed signal are never strictly instantaneous.

The sprocket pulse signal varies between 0 and $V_{max}$ volts in amplitude. When an appropriate pulse edge occurs in the sprocket signal, and active stop mode is selected, the film is stopped and the amplitude of the sprocket signal lies at some intermediate value within this range. In order to align the film frame with the centre of the pulse edge, the film is moved forwards or backwards through the viewing gate under the control of the film drive servo-system. If the film is stopped upon detection of selected rising pulse edges, then

(i) if the sprocket signal amplitude $> \dfrac{Vmax}{2}$ the frame is shifted back,

(ii) if the sprocket signal amplitude $< \dfrac{Vmax}{2}$ the frame is shifted forward.

This feedback process is continued until an amplitude value of $\dfrac{Vmax}{2}$ is obtained.

This conventional method of film alignment in active stop mode suffers from problems of inertia and errors, as mentioned above.

The present invention is defined by the independent claims to which reference should now be made. Advantageous features of the invention are set out in the subclaims.

A preferred telecine which will be described hereinafter and which embodies the invention includes a control-loop for vertical control of scans produced by a cathode ray tube, to bring them into alignment with film frames. As scans are generated without mechanical moving apparatus, there is no significant inertia and scans can be shifted practically instantaneously. It is not necessary to filter signals which control scan alignment, so correction can be more accurate and immediate than in the prior art discussed above.

The principle of adjusting scans to align them with a film is known in prior art systems such as described in United States patents US4104680, US3530973, US2922841 and United Kingdom patent GB1412128. However, the systems that they disclose have problems of false corrections due to dust or damage of individual sprocket holes, because they rely upon detection of sprocket holes using methods which do not involve mechanical contact with the holes. In this prior art, dust is not displaced and dusty or damaged holes provide false corrections.

The preferred telecine to be described operates differently. Alignment is detected using a light interrupter disc connected to a film sprocket wheel. As sprockets of the wheel make good mechanical contact with leading edges of several pairs of sprocket holes at all times, the problems of false corrections due to dust or sprocket hole damage are avoided.

Another United States patent US 3867570 discloses a scan alignment correction system in an intermittent motion telecine. This has a light interrupter drum connected to the axle of a sprocket wheel. A pulsed signal from the drum provides information on which of several discrete positions the sprocket wheel is in. This position signal is used to control a correction circuit to provide an appropriate preset correction to the scan generation circuitry. This prior art alignment system can compensate for predictable errors such as systematic and cyclic errors which result from tolerances in dimensions of telecine components. However, it cannot correct for random variations in film positions, or drifts in cyclic errors such as result from wear or changing operating conditions.

The preferred apparatus embodying the present invention operates differently. Random errors, drifts, systematic and cyclic errors may all be corrected.

Thus, preferred embodiments of the present invention may overcome the problems of inertia and errors of the prior art. Virtually instantaneous alignment of scans to film frames may be performed in film scanners and telecines, even when operated in active stop mode. Misalignments which are not purely systematic and cyclic may also be corrected.

Furthermore, whereas use of a light interrupter drum to produce one pulse per frame is known in the art, the preferred apparatus provides a plurality of pulses per frame for scan alignment servo-control. This permits correction of faster perturbations in film speed.

Thus an improved scanning system is provided which is nevertheless relatively simple in construction and manufacture.

An embodiment of the invention will now be described, by way of example, with reference to the drawings in which:

Figure 1 is a simplified block diagram of a telecine embodying the invention;

Figure 2 is a simplified diagrammatic front view of the sprocket wheel and pulse generator of the telecine;

Figure 3 is a side view of the light-interrupter disc;

Figure 4 is a block diagram of part of the microprocessor;

Figure 5 is a diagram of timing pulses and states;

Figure 6 is a flow diagram showing the steps performed by the microprocessor in controlling scan alignment; and

Figure 7 illustrates operation of the active stop mode.

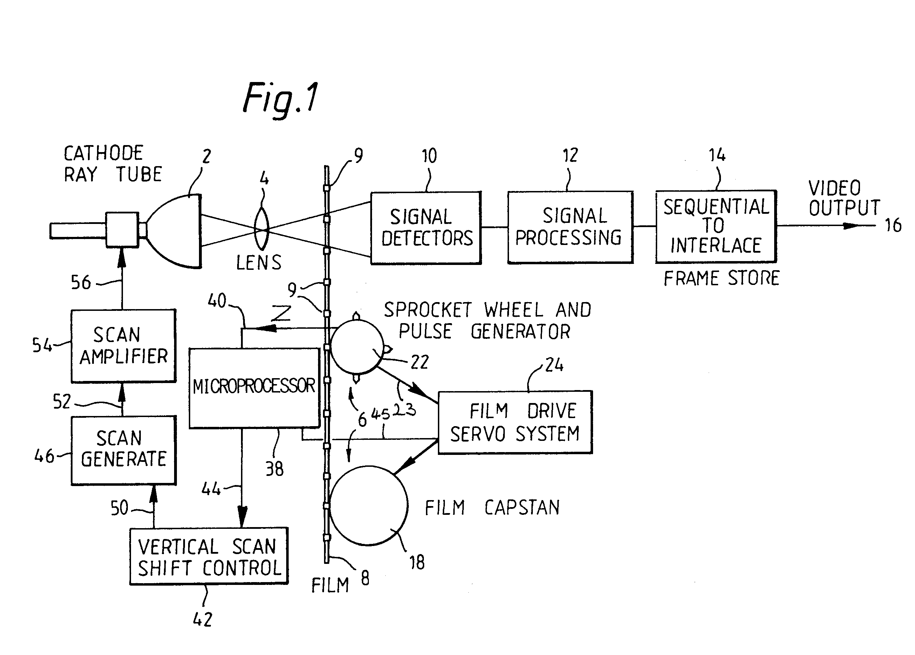

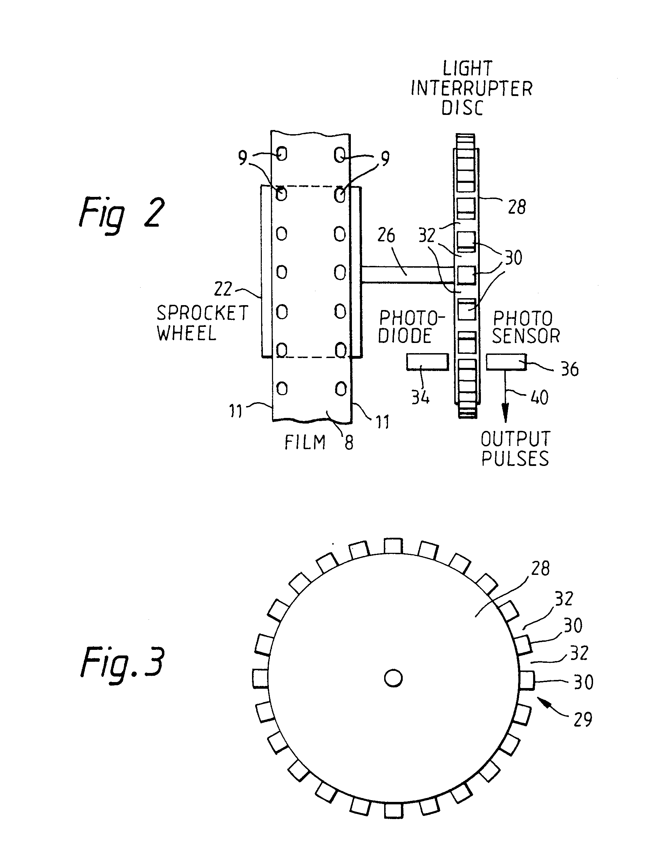

The telecine shown in Figure 1 comprises a cathode ray tube 2, focussing lens 4, film transport 6 for a film 8, signal detectors 10, signal processing circuitry 12 and a sequential to interlace frame store 14 having a video output 16. The film 8 has regularly spaced sprocket holes 9 along one or both of its edges 11 (Figure 2).

A light beam which is moved in a raster scan is produced by the cathode ray tube 2. The beam is focussed by the lens 4 onto the frame of the film 8 currently being scanned, and light transmitted through the film is detected by the signal detectors 10 which are typically photomultipliers. Electrical signals produced by the signal detectors are delivered to signal processing circuitry 12. The processed signals are then stored in the frame store 14, to be passed via the video output 16 to a display or storage device (not shown).

The film transport 6 includes a film capstan 18 driven by a drive motor, and a sprocket wheel 22. As thus far described, the telecine is a conventional flying-spot telecine as embodied, for example by the URSA (TM) telecine made and sold by Rank Cintel Limited of Ware, Herfordshire, England.

As shown in Figure 2, the sprocket wheel 22 has an axle 26 on which a light-interrupter disc 28 is fixed for rotation therewith about the same rotary axis. The disc 28 lies in a plane perpendicular to the axis of the sprocket wheel 22. As shown in Figure 3 the circumferential part 29 of the disc 28 comprises a series of radially extending fingers 30, such that each finger 30 subtends a small sector of the circumference. Between each pair of adjacent fingers is a gap 32. Alternatively, there might be circumferentially spaced holes in the circumferential part of the disc instead of gaps 32, such that the disc has an unbroken circumferential rim. Such an alternative disc is used in the same way.

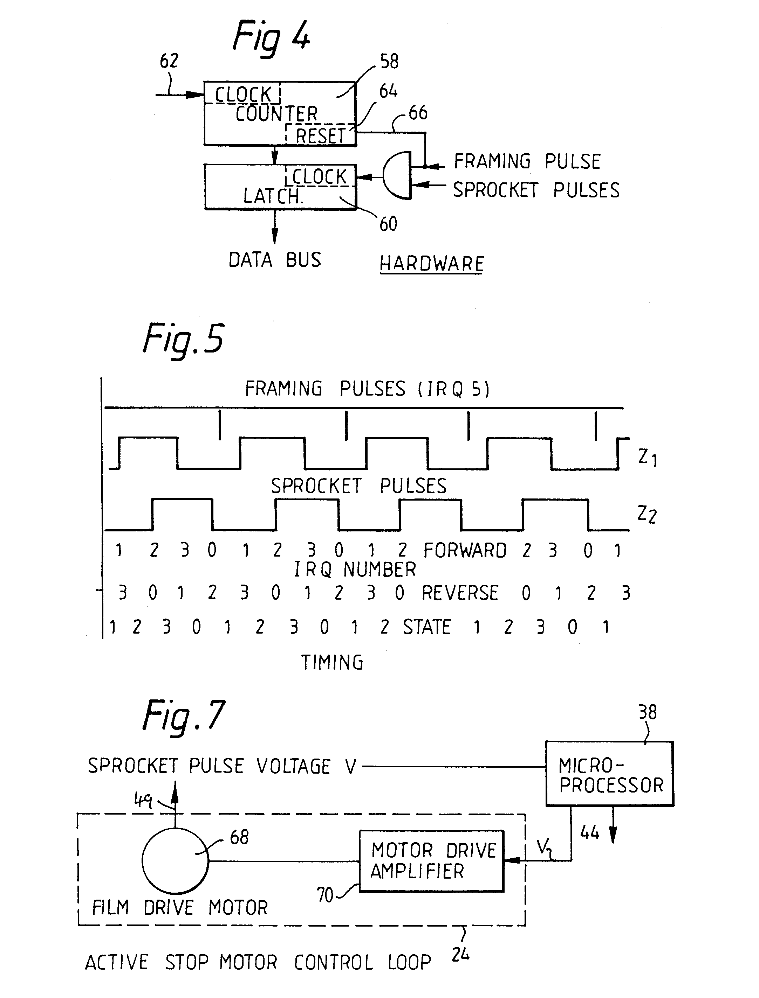

A light source, in the form of a photodiode 34 and photo-sensor 36 are positioned each on an opposite side of the circumferential part 29 of the disc 28, so as to face one other. In operation, the disc 28 rotates directly with the sprocket wheel 22. As the disc rotates, the light path between the diode 34 and photo-sensor 36 is alternately interrupted and completed as the fingers 30 cut the light path. A pulsed signal $Z_1$ (Figure 5) is produced by the sensor 36 in response to the intensity of detected light. There is a duplicate photodiode (not shown) and photo-sensor (not shown) which provides another pulse signal $Z_2$ in the same way which is in a fixed phase relationship to the first pulse signal $Z_1$ as shown in Figure 5.

The pulsed output signals $Z_1$, $Z_2$ are used to control vertical alignment of the scans as well as controlling the film drive. Referring back to Figure 1, scan shift controls (both vertical 42 and horizontal (not shown)), and the scan generation circuitry 46 are themselves known in the art. The pulsed output signals are $Z_1$, $Z_2$, referred to collectively as Z, are input to a microprocessor 38 which controls the vertical scan shift control 42 via a channel 44. The vertical scan shift control 42 is connected to the scan generation circuitry 46 via a channel 50, and is operative to adjust the scan vertically in dependence on the pulsed signals Z.

A scan signal is generated by the scan generation circuitry 46 under the control of the microprocessor 38 and vertical scan shift control 42. The scan signal is provided via a channel 52 to a scan amplifier 54. The amplifier scan signal is then sent to deflection coils 56 of the cathode ray tube 2 to adjust alignment of the scans.

The pulsed signals Z are also sent to a microprocessor 40 which controls a film drive servo-system 24 via a channel 45 which in turn controls the drive motor of the capstan 18 to adjust alignment of the film 8.

The sprocket wheel and pulse generator 22 is also connected directly to the film drive servo-system 24 via channel 23. This connection does not influence operation of the invention and is used to operate auxiliary functions within the servo-system such as the provision of pulses to synchronise separate sound reading equipment or to synchronise a programming system.

Figure 4 shows a part of the microprocessor 38. The microprocessor control circuitry includes a counter 58 and a latch 60 connected thereto. The counter has an input 62 for a high frequency clock and a reset control 64 with a framing pulse input port 66. A framing pulse (IRQ5) is produced once per frame when the telecine is in operation. This pulse acts to reset the counter 58 after each frame.

In addition to the framing pulses there are two sprocket pulse signals Z comprising first and second signals $Z_1$, $Z_2$ which are input to the latch 60. The sprocket pulses of the signals Z cause the value of the counter at that time to be stored in the latch. This LATCH value is a measure of the number of clock pulses since the last frame pulse reset. The LATCH value is normalised by the number of clock pulses for one frame PERIOD to provide a signal SPROCKET which is a precise measure of how far through the current film frame has been transported. A value NORM(STATE) which is the expected fractional amount of the current frame transported is subtracted from SPROCKET and the resultant SPROCKET value is ensured to be within a -0.5 to 0.5 range. This normalised and ranged SPROCKET value is a measure of the difference between actual and expected frame position; it is the alignment correction signal applied to the vertical scan shift control 42. In Figure 4, the sprocket pulses are received from the sprocket pulse generator 22 and are applied to the clock input of the latch 60 via a two input AND gate. The second input of the AND gate is provided by the framing pulse. The output of the latch is provided to the databus of the microprocessor 38.

The two signals Z in combination provide four flags at pulse edges of the signals, as follows:-

| $Z_1$ | $Z_2$ | Flag = IRQ |
|---|---|---|
| changing up | low | 1 |
| high | changing up | 2 |
| changing down | high | 3 |
| low | changing down | 0 |

and four states as follows:-

| $Z_1$ | $Z_2$ | STATE |
|---|---|---|
| low | low | 1 |
| high | low | 2 |
| high | high | 3 |
| low | high | 0 |

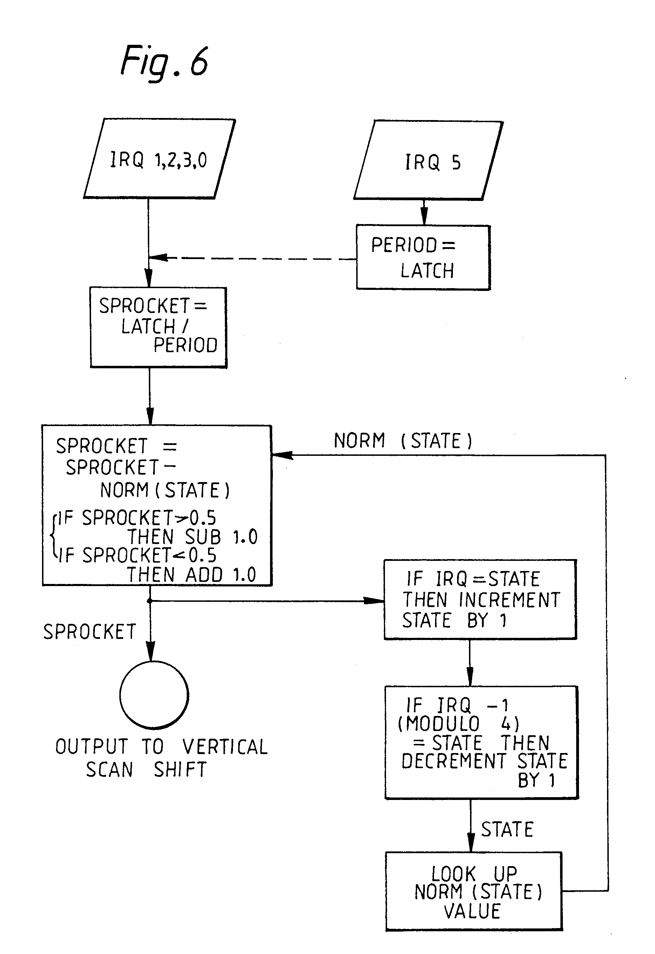

These flags and states are shown in Figure 5. If the sprocket wheel is moving forward IRQ=STATE so STATE is incremented at each pulse edge by a value of 1. If the wheel is moving backwards then IRQ-1=STATE and STATE is decremented by 1. This is shown in Figure 6.

The resulting STATE value is an indicator of the expected position within the current frame at that time. The expected position NORM (STATE) which is relative to a chosen reference position is looked up in the memory of the microprocessor. NORM (STATE) is the expected position as a fraction of the current frame transported. One possible set of NORM (STATE) values is as follows:-

NORM (STATE) VALUES

    NORM [1] = 1/8
    NORM [2] = 3/8
    NORM [3] = 5/8
    NORM [4] = 7/8

If for example, there are 4 frames transported per sprocket wheel rotation, and four states per frame, a fraction of 1/8th of a frame transported $= \dfrac{360}{4} \times \dfrac{1}{8} = 11^{1/4\circ}$ of sprocket wheel rotation.

The block labelled PERIOD = LATCH in figure 6 indicates that in response to input 5 the value in the latch of Figure 4 is stored in the microprocessor memory under the label PERIOD. This value represents the time period between the last two FRAMING pulses, the counter being reset on every FRAMING pulse.

Considering the example shown in Figure 6 in more detail, there are four interrupts (IRQ 0,1,2,3) from the sprocket pulses and one from the framing pulse (IRQ 5). The servo action of the system will attempt to adjust the motion of the film such that the sprocket pulses are specifically related to the framing pulse. The required relationship of the sprocket pulses may for example be at 1/8, 3/8, 5/8, 7/8 of the frame pulse period. These four values are the normalised (NORM(STATE)) values, the appropriate one being addressed by the modulo 4 conter STATE. These NORM(STATE) values may thus be considered as "expected" values of the LATCH/PERIOD signal. If the servo were perfect and no variations of the film speed occurred then the actual value of (LATCH/PERIOD) would equal the expected value and the final value for SPROCKET would be zero resulting in no further correction. The final value of sprocket shown connected to the vertical scan shift also goes to the film drive servo system and is the main feedback path which controls the film speed. Any subsequent variation of film speed for example would result in non-zero values of SPROCKET which would be fed to the servo system and the vertical scan shift in such phase as to correct the error.

The value NORM(STATE) is not then determined by the sprocket signals z, these signals merely choose one of four fixed values for NORM(STATE).

Referring now to figure 7, the active stop mode will now be described in detail. In the active stop mode, the flow diagram of figure 6 is not used. A film frame to be examined by the operator is stopped in a position of approximate alignment in the viewing gate when the edge of an appropriate sprocket pulse is detected. To do this, the film drive servo-system is operated at a low gain such that the film frame will usually fall short of its correct position. The amplitude V of the sprocket pulse $Z_1$ lies within the range 0 to Vmax volts, where Vmax is the maximum pulse amplitude.

The film drive servo-system 24 comprises a film drive motor 68 and motor drive amplifier 70 which is provided with the sprocket pulse voltage V via the microprocessor within an active-stop motor control loop, as is known in the art. The sprocket pulse voltage is additionally supplied to the microprocessor 38 to control vertical scan alignment in order to compensate for any residual error in film frame position.

As the system is almost stationary in the active stop mode no sprocket pulses $Z_1$, $Z_2$ are produced. However, the sprocket pulse voltage V is the same signal as one of the sprocket pulses and will therefore have a voltage valve of the minimum pulse amplitude, the maximum pulse amplitude or some intermediate valve if the pulse generator has stopped exactly on a pulse edge.

The mode operates by feeding a modified version of the voltage V to the film capstan or drive motor 68 via the microprocessor 38 and amplifier 70 in such a fashion as to cause the film, and thus the sprocket wheel and pulse generator to advance to the point where the intermediate valve is achieved and is brought close to the mid value V/2 indicating a pulse edge. The actual value of the sprocket pulse voltage V is then substracted from the nominal mid-value V/2 to give a measure of the very small residual positional error. This residual error signal is suitably scaled and fed to the scan shift circuits so as to bring the scans in exact register with the exact film position. In figure 7 this latter signal is sent by the microprocessor 38 or channel 44 to the vertical scan shift control.

Thus, as the gradient of the slope at a pulse edge is known, say X volts/mm, the microprocessor 38 operates to determine a residual signal value $^{Vmax}/_2$ - V which is a measure of how far the film is misaligned ($^{Vmax}/_2$ - V = Xd where d is the distance of misalignment/mm).

The residual signal $^{Vmax}/_2$ - V is fed from the microprocessor 38 to the vertical scan shift control which in turn applies the required shift to the scan generation circuitry 46. In this way, the scan is brought into alignment with the approximately positioned film frame in the viewing gate. In contrast to figure 6, the SPROCKET signal is not produced in the stop mode. The SPROCKET signal in the run mode is fed to the vertical scan shift control on a different channel from the microprocessor 38 (not shown) to the active stop signal which is fed to the vertical scan shift control on channel 44. In figure 7 the arrow 49 running from the drive motor signifies the sequence of events where rotation of the film capstan drive motor causes the film to move, in turn causing the sprocket wheel to rotate and the output from the pulse generator to change as described.

In another embodiment of the invention, an interrupter drum is used in an equivalent manner to the interrupter disc.

The output signal used to control the scan alignment could additionally be used to control the film transport mechanism, for example the capstan servo control.

## Claims

1. Apparatus for converting between images stored on film and images represented by video signals comprising scanning means (2,4,10) for scanning film, means for determining film position comprising a wheel (22) or roller driven by the film in use, means (28,34,36) for generating from the wheel or roller a first signal (Z) representative of determined film position, and means (38) for deriving from the first signal and a reference signal indicative of expected film position, an output signal representative of differences between determined and expected film positions, and scan correction means (38,42) for adjusting the position of the scan of the scanning means in dependence upon the derived output signal.

2. Apparatus according to claim 1, comprising stop control means (38,24) selectively operable to stop film frames in a viewing gate, the scan correction means being operative to align a scan with a stopped film frame.

3. Apparatus according to claim 1 or claim 2, in which the scanning means comprises a flying-spot scanner.

4. Apparatus according to any of claims 1 to 3, in which the means for generating comprises means (28) mounted on the wheel (22) or roller, a signal source (34) for providing a signal to the mounted means (28) and an associated sensor (36) for detecting a signal from the mounted means (28) which varies in response to movement of the mounted means and providing the first signal.

5. Apparatus according to claim 4, in which the signal source (34) comprises an electromagnetic signal source (34), and the means (28) mounted on the wheel (23) or roller is operative to interrupt intermittently a signal path from the source to the sensor.

6. Apparatus according to claim 5, wherein the interrupter means is a disc or drum having an array of equally spaced apertures (32) disposed there around, the signal source (34) and sensor (36) being disposed on opposite sides of the disc/drum, and the sensor is operative to provide the first signal with a level dependent on whether or not an aperture is between the source and sensor.

7. Apparatus according to claim 6, in which the signal source (34) is a photodiode and the corresponding sensor (36) is a photo-sensor which produces pulses as the light interrupter disc/drum rotates relative to it.

8. Apparatus according to claim 7, in which more than one pulse is produced for each frame of film transported.

9. A method of converting between images stored on film (8) and images represented by video signals comprising the steps of:
   (i) determining film position from a wheel (22) or roller driven by the film and generating a first signal (Z) representative of determined film position,
   (ii) deriving from the first signal and a reference signal indicative of expected film position, an output signal representative of differences between determined and expected film positions, and
   (iii) adjusting the position of a scan which scans the film in dependence upon the derived output signal.

10. A method according to Claim 9, comprising selectively stopping a film frame in a viewing gate and adjusting the alignment of a scan to the stopped film frame in response to the magnitude of the output signal.

11. A method according to claim 9 or claim 10, wherein scanning is flying-spot scanning.

12. A method according to any of claim 9 to 11, in which the first signal (Z) is generated by
   (i) applying a signal to an element (28) mounted on the wheel or roller,
   (ii) detecting a signal from the element, the signal varying in response to movement of the element,
   (iii) providing the first signal (Z) in dependence upon the detected signal.

13. A method according to claim 12 wherein the detected signal is the signal applied to the element intermittently interrupted by the element such that the first signal (Z) which is provided in dependence upon the detected signal comprises pulses, and wherein the signal applied is electromagnetic.

14. A method according to claim 13, including providing more than one pulse for each frame of film transported.

Fig.1

LIGHT
INTERRUPTER
DISC

*Fig 2*

9 9

22
SPROCKET
WHEEL

26 32

28

30

PHOTO-
DIODE

PHOTO
SENSOR

36

34

11

11

40

FILM 8

OUTPUT
PULSES

*Fig.3*

28

32

30

32

30

29

## Fig 4

62 → CLOCK
COUNTER 58
RESET 64 66
CLOCK 66 ← FRAMING PULSE
LATCH ← SPROCKET PULSES
60
↓
DATA BUS          HARDWARE

## Fig.5

FRAMING PULSES (IRQ 5)

$Z_1$

SPROCKET PULSES

$Z_2$

| 1 | 2 | 3 | 0 | 1 | 2 | 3 | 0 | 1 | 2 FORWARD | 2 | 3 | 0 | 1 |

IRQ NUMBER

| 3 | 0 | 1 | 2 | 3 | 0 | 1 | 2 | 3 | 0 REVERSE | 0 | 1 | 2 | 3 |

| 1 | 2 | 3 | 0 | 1 | 2 | 3 | 0 | 1 | 2 STATE | 1 | 2 | 3 | 0 | 1 |

TIMING

## Fig.7

38
MICRO-
PROCESSOR

SPROCKET PULSE VOLTAGE V ——————————

49 ↑

68          44 ↓

MOTOR DRIVE
AMPLIFIER ← $V_1$

70

FILM DRIVE MOTOR

ACTIVE STOP MOTOR CONTROL LOOP 24

# Fig. 6

IRQ 1,2,3,0

IRQ 5

PERIOD =
LATCH

SPROCKET =
LATCH /
PERIOD

NORM (STATE)

SPROCKET =
SPROCKET −
NORM (STATE)

{ IF SPROCKET > 0.5
      THEN SUB 1.0
  IF SPROCKET < 0.5
      THEN ADD 1.0

SPROCKET

OUTPUT TO VERTICAL
SCAN SHIFT

IF IRQ = STATE
THEN INCREMENT
STATE BY 1

IF IRQ −1
(MODULO 4)
= STATE THEN
DECREMENT STATE
BY 1

STATE

LOOK UP
NORM (STATE)
VALUE